# EUROPEAN PATENT SPECIFICATION

(11) **EP 3 881 009 B1**
(45) Date of publication and mention of the grant of the patent: **06.09.2023**
(21) Application number: 19818287.5
(22) Date of filing: 12.11.2019
(51) Int. Cl.: F24F 11/64, F24F 11/65, F24F 11/30, F24F 11/00

(54) **METHOD OF CONTROLLING AN AIR-CONDITIONING SYSTEM**
VERFAHREN ZUR STEUERUNG EINER KLIMAANLAGE
MÉTHODE DE CONTRÔLE D'UN SYSTÈME DE CONDITIONNEMENT D'AIR

(30) Priority: 13.11.2018 IT 201800010272
(43) Date of publication of application: 22.09.2021
(73) Proprietor: De' Longhi Appliances S.r.l. Con Unico Socio, 31100 Treviso (IT)
(72) Inventor: MONTICELLI, Enrica, 31100 TREVISO (IT); MIRMIRAN, Roshanak, 31100 TREVISO (IT); GIOMO, Andrea, 31100 TREVISO (IT)
(74) Representative: Petraz, Gilberto Luigi
(86) International application number: PCT/IT2019/050242
(87) International publication number: WO 2020/100176

(56) References cited:
- US-A1- 2006 234 382
- US-A1- 2010 305 761
- US-A1- 2018 144 602
- US-B1- 6 704 681

## Description

### FIELD OF THE INVENTION

The present invention concerns a method to control a conditioning apparatus to prevent or reduce the risk that molds will form and grow in the internal spaces of a building.

The invention also concerns a conditioning apparatus in which the control method as above is implemented.

### BACKGROUND OF THE INVENTION

Conditioning apparatuses are known in the state of the art which are used to regulate the environmental conditions of the internal spaces of a building.

In particular, these conditioning apparatuses are typically used to heat or cool or dehumidify the spaces as above.

The conditioning apparatuses known in the state of the art are directly driven by the user, for example by means of a remote control or a control panel on which it is possible to set the desired environmental temperature and/or relative humidity. In other solutions known in the state of the art, the apparatuses can be driven remotely from a portable electronic device, such as for example a smartphone, or from a fixed monitoring unit, for example mounted on one of the walls of the room to be conditioned.

Some types of conditioning apparatuses provide the possibility that a user can pre-set a "delayed" activation of the apparatuses themselves, so that they are activated at a determinate subsequent moment, for example at a certain preestablished time at which the user could also be absent.

It is also well known that, during use, while these conditioning apparatuses operate to bring the room to be conditioned to the parameters set by the user, they modify the temperature and/or the relative humidity of the room to be conditioned.

One disadvantage of the conditioning apparatuses known in the state of the art is that they have to be activated or programmed directly by the user.

This is disadvantageous because the user is not able to program the apparatus by setting the most suitable functioning parameters, as a function of the current external atmospheric conditions and/or of the current internal environmental conditions. An incorrect programming of the apparatus can lead in one case to the apparatus functioning for a period of time not sufficient to reduce the likelihood of mold forming, or - in the opposite case - to the apparatus functioning for an excessive amount of time, which determines an increase in electricity consumption, and the corresponding costs.

Another disadvantage of apparatuses of the known type occurs when, in the event the user is absent for an extended period of time, the conditioning apparatus remains inactive for a long time, and harmful environmental conditions can be generated in the room to be conditioned.

In particular, as far as the purposes of the present invention are concerned, the harmful environmental conditions referred to are those conditions that promote the formation and growth of molds in the room.

This is naturally undesirable because molds have a negative impact on people's health. In some cases, in fact, molds are able to trigger various types of infections of a bacterial nature in humans. Furthermore, molds damage the walls of the rooms because they damage the plaster, which will have to be restored after removing the mold from them.

For these reasons, the problem of the formation and spread of molds in the internal rooms of a building has been studied in great detail in the past in order to identify the conditions that promote the formation and spread of molds.

The studies conducted have demonstrated a direct correlation between the relative humidity values and the likelihood of molds forming.

It has been observed that high values of relative humidity promote the formation of molds. For example, during the winter season, particularly in countries where the cold season is particularly harsh, the formation of molds tends to occur in the proximity of the walls of the rooms to be conditioned which are generally at a lower temperature than in other zones of the room.

It is in fact known that molds require a substrate on which to proliferate, such as for example walls made of wood, walls covered with ceramic tiles, plasterboard walls, walls covered with wallpaper, carpets, furniture, etc. Then there are some internal rooms, such as the kitchen or bathroom, where - due to their intended use - the relative humidity is higher and the risk of molds forming is therefore higher.

It has also been observed that another parameter which can promote the formation of molds is the exposure time, that is, the amount of time during which the high values of relative humidity as above persist in the internal spaces.

Once the parameters that influence the formation, proliferation and growth of molds were known, systems were developed in the state of the art to prevent them. For example, US document US-A1-2006/0234382 describes a system that integrates an algorithm to determine whether the temperature and humidity values detected are indicative of conditions that promote or discourage the formation of molds.

One disadvantage of the system described by this prior art document is that it is mainly predictive. Furthermore, this solution does not allow to detect in an appropriate manner the values of temperature and humidity, so that the result obtained from the processing could not be able to efficiently asses if it is necessary, or not, to modify the environmental conditions to lower the risk of mold formation and growth.

Document US-A-2010/0305761 discloses an apparatus for the automatic control of an environment.

Both cited patent documents disclose all the features of the preamble of claim 1.

One purpose of the present invention is therefore to provide a method to control a conditioning apparatus that allows to prevent, or at least significantly limit, the formation of molds, reducing the risk of molds forming and growing in the rooms to be conditioned by the apparatus.

One purpose of the present invention is to provide a control method thanks to which a conditioning apparatus can activate automatically under determinate environmental conditions.

Another purpose of the present invention is to provide a method to control a conditioning apparatus which allows to repeatedly perform functioning cycles for a predefined time when determinate environmental conditions occur.

Another purpose of the present invention is to provide a control method which allows to identify zones of the room to be conditioned in which there is a high likelihood or risk that mold will form, proliferate and grow, and to command as a consequence the conditioning apparatus to direct a flow of air exiting from the apparatus selectively toward the zones identified.

Another purpose is to provide a conditioning apparatus in which a control method according to the present invention is implemented.

Another purpose of the present invention is to provide a conditioning apparatus able to autonomously recognize the presence of environmental conditions which promote the formation of molds, so as to be activated - for at least one functioning cycle having a predetermined duration - when such conditions occur

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a method is provided to control a conditioning apparatus to prevent or reduce the risk/likelihood that molds will form, proliferate and grow in the room to be conditioned.

The method according to the present invention provides that the conditioning apparatus receives information that is characteristic of the room to be conditioned relating at least to the thermal state of the room itself.

In some embodiments, the conditioning apparatus detects or directly derives this characteristic information by means of sensor means that can be integrated in the conditioning apparatus.

In some embodiments, the method provides that the conditioning apparatus detects or derives this characteristic information repeatedly and periodically for a predefined monitoring period.

According to some embodiments, during the monitoring period the method provides that the sensor means perform a plurality of successive detections of temperature and relative humidity.

According to other embodiments, at the end of the monitoring period, the method provides to average the detected values of temperature and relative humidity in order to obtain a respective average value of temperature and relative humidity.

In some embodiments, the sensor means comprise temperature and humidity sensors of the type known in the state of the art.

In another embodiment, the conditioning apparatus receives the characteristic information as above from the outside, for example from remotely located sensor means which are not integrated in the apparatus, but rather are mounted on a third device for a remote control or on a control panel, for example mounted on one of the walls of the dwelling.

In some embodiments, the information that is characteristic of the room to be conditioned comprises at least one of either the following parameters: internal temperature of the room to be conditioned detected at one or more detection points, external environmental temperature, atmospheric pressure, relative humidity of the room to be conditioned, external humidity, degree of thermal insulation of the room to be conditioned, energy efficiency index for the room to be conditioned, volume of the room to be conditioned, mode of use of the room to be conditioned, geographical exposure of the room to be conditioned with respect to the cardinal points, intended use of the room to be conditioned, building materials used for the construction of the walls of room to be conditioned, climatic conditions (for example surmy/rainy/foggy weather), weather forecasts.

The method according to the invention provides to calculate a risk factor indicative of the likelihood of mold formation which is a function of the characteristic information as above.

The risk factor may be calculated according to calculation algorithms known in the state of the art comprising different predictive models of the growth of the molds, such as, by way of a non-limiting example: the VTT model, the Clarke & Rowan model, the Hens isopleth curves model, the Sedlbauer isopleth curves system, the bio-hygrothermal model. For example, the risk factor may be identified by a combination of the relative humidity inside the room to be conditioned and the exposure time during which the relative humidity persists.

In another example, the risk factor may be obtained as a ratio between the differences between the minimum surface temperature of an internal wall and the external temperature, with respect to the difference between the internal temperature and the external temperature.

Once the risk factor is known, the method according to the invention provides to compare it with a respective threshold value and to activate the conditioning apparatus for a determinate interval of time when the outcome of the step of comparing the risk factor with the respective threshold value reveals a high risk of mold formation.

In some embodiments, the method according to the invention provides to activate the conditioning apparatus when the outcome of the step of comparing the risk factor with the respective threshold value has revealed a high risk of mold formation at least for a minimum period of time within a reference time frame.

The conditioning apparatus may be activated when the comparison between the risk factor and the threshold value has revealed a high risk of mold formation for example at least for one hour, or for two hours, within a reference time frame of twelve hours.

The threshold value may be determined as a function of the characteristic information as above of the room to be conditioned. For example, the threshold value can be defined by a relative humidity level present inside the room to be conditioned equal to 70% for an exposure time of two hours over the course of a twelve-hour period, or by a relative humidity level present inside the room to be conditioned equal to 90% for an exposure time of one hour over the course of a twelve-hour period.

The method according to the invention provides to drive deflector means comprised in the conditioning apparatus at least during the monitoring period as above, in order to mix in a homogeneous manner the air in the room to be conditioned at least during the detection of the characteristic information by the sensor means as above.

The air inside a room, particularly when there is nobody inside it, tends to become still and stop, thus the values detected by the sensor means could be also very different from the average values inside the room, with the risk of obtaining an incorrect computation of the risk factor.

Thanks to the mixing of the air before and/or during the monitoring period it is possible to obtain a homogeneous distribution of the air, thus allowing a particularly effective detection by the sensor means.

In some embodiments, the method according to the invention provides a thermal scanning step of the room to be conditioned before activating the conditioning apparatus.

In one embodiment, the thermal scanning step can be implemented by means of suitable sensor means, for example optical or thermal sensors, or a combination thereof. In particular, the sensor means can comprise infrared sensors. The thermal scanning step allows to identify zones, or walls, of the room to be conditioned that have a reduced temperature.

In some embodiments, after the thermal scanning step as above, the method according to the invention provides to drive deflector means comprised in the conditioning apparatus to direct a flow of air arriving from the apparatus toward the zones, or walls, with a reduced temperature which have been previously identified.

According to the invention, a conditioning apparatus is also provided which implements the control method as above.

The conditioning apparatus object of the present invention can be an air conditioner, for example of the domestic type, both portable and also attached to the walls of the room to be conditioned.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic view of an apparatus in which the method according to the present invention can be implemented;
- fig. 2 is a schematic perspective view of a room to be conditioned in which a conditioning apparatus is disposed which implements a method according to the present invention;
- fig. 3 is a graph which shows some characteristic curves of relative humidity as a function of the internal temperature of the room to be conditioned.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

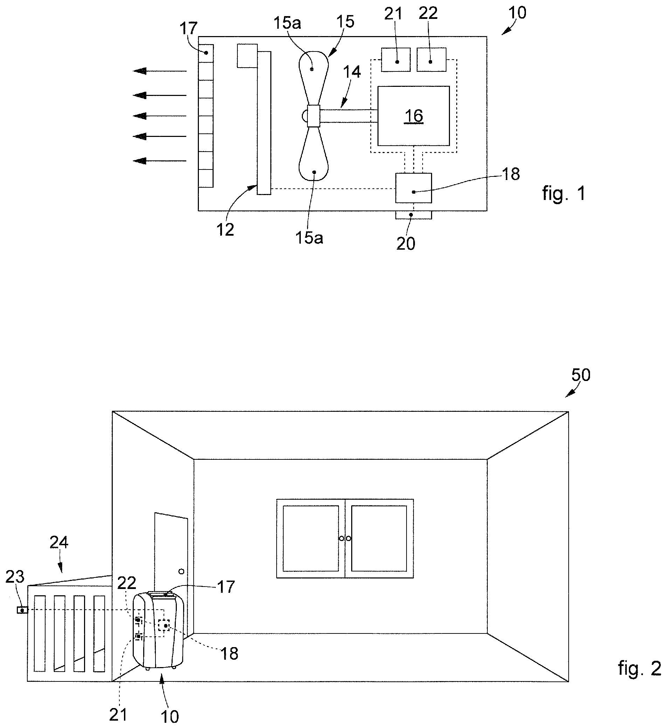

Embodiments described here concern a method to control a conditioning apparatus, which is indicated as a whole with reference number 10 and is visible in fig. 2, in which it is disposed inside a room to be conditioned 50.

According to some embodiments, the conditioning apparatus 10 can be, by way of example, an air conditioner, for example of the domestic type, and suitable to generate a flow of air toward a room to be conditioned 50.

The conditioning apparatus 10 can be of a type suitable both to heat a room, typically when the environmental temperatures are low, and to cool a room, in particular when the environmental temperatures are high, and also to dehumidify a room, in particular when the relative humidity is high.

The conditioning apparatus 10, schematically shown in fig. 1, comprises at least one conditioning device 12, able to heat or cool the air, and a ventilation device 14 suitable to generate a flow of air toward the conditioning device 12 in order to direct the heated or cooled air toward the room to be conditioned 50.

The conditioning device 12 is of a type known in the state of the art and can comprise a heating element of the resistive type and a cooling module.

The ventilation device 14 may comprise a ventilator, or a fan 15 provided with a plurality of blades 15a and connected to a motor member 16 suitable to make the fan 15 rotate at the desired speed.

According to some embodiments, the fan 15 can be of the speed adjustable type and different speeds and mode of use can be provided, for example low, medium, high or even others.

In one embodiment, the flow of air exits the apparatus through an exit in which deflector means 17 are disposed, and which can be oriented so as to direct the flow of air in a preferred direction.

In one embodiment, the deflector means 17 comprise a plurality of fins which can be oriented.

According to the invention as defined in claim 12 ,the conditioning apparatus 10 comprises a control and command unit 18, connected at least to the conditioning device 12 and to the ventilation device 14 and configured to command the functioning thereof.

The conditioning apparatus 10 further comprises temperature sensor means 21, such as for example an analog or digital thermometer provided with a thermosensitive element known in the state of the ar, humidity sensor means 22, for example a hygrometer of a type known in the state of the ar, wherein the temperature sensor means 21 and the humidity sensor means 22 are operationally connected to the conditioning apparatus and can be both integrated on board the conditioning apparatus 10, or disposed on a third device, separate and distant from the apparatus.

According to some embodiments, other temperature sensor means 23 are provided which are located remote from the conditioning apparatus. For example, as shown in fig. 2, the other temperature sensor means 23 are disposed on a balcony 24 adjacent to the room to be conditioned 50.

In some embodiments, the sensor means 21, 22 and 23 are all operationally connected to the control and command unit 18.

The control method according to the invention provides to receive the characteristic information of the room to be conditioned and, on the basis of this information, calculate a risk factor indicative of the likelihood that molds will form.

Subsequently, the method provides to compare the risk factor with a threshold value.

The risk factor can be calculated according to many different algorithms known in the state of the art based on different predictive models of the growth of molds.

The characteristic information of the room to be conditioned 50 that has to be sent to apparatus 10 comprises parameters that are correlated to the algorithm chosen for the calculation of the risk factor. The threshold value is also chosen as a function of the algorithm that is being used.

By way of a non-limiting example, we will now describe some modes for calculating the risk factor, indicating the respective threshold values for each of them.

A first example of calculation of the risk factor is based on the criterion of the ratio between temperatures.

In particular, this criterion provides to:
- calculate a first difference between the minimum surface temperature of an internal wall and the external environmental temperature,
- calculate a second difference between the temperature of the air inside the room to be conditioned and the external environmental temperature,
- calculate the ratio between the first difference and the second difference; the result of this ratio being comprised between 0 and 1.

The value resulting from this ratio is indicative of the risk of mold formation and passes from a high risk in proximity to the value 0 to a minimum risk in proximity to the value 1.

In this example, the threshold value with which the result of the ratio as above has to be compared is approximately 0.65 and the conditioning apparatus 10 is activated if the result of the ratio (that is, the risk factor calculated) is lower than 0.65.

A second example of calculation of the risk factor is based on the relative humidity criterion.

In this case, the hygrometer 22 comprised in the conditioning apparatus 10 detects the relative humidity of the room to be conditioned 50.

This value detected is compared with a threshold value, which in this case can be equal to a relative humidity of 70% or 90%.

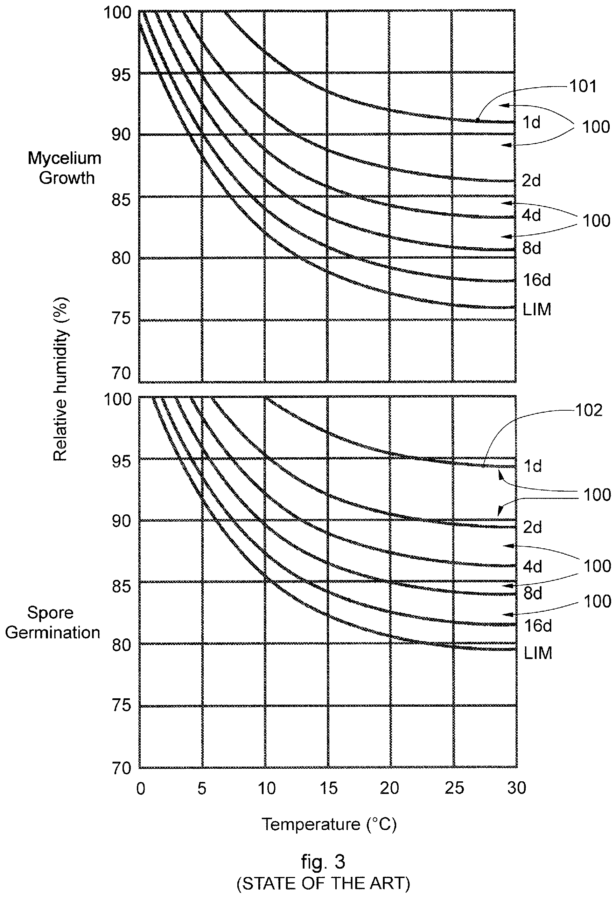

In a third example, it is possible to derive the risk factor from graphs known in the literature, such as for example the one shown in fig. 3, where isopleth curves 100 are visible determined by means of experimental measurements of the germination of spores, and of the growth of the mycelium, for some species of mold on a determinate substrate. Each curve 100 collects the combinations of temperature and relative humidity values beyond which, relative to a certain time interval (expressed in days), the germination of spores/mycelium growth begin to occur. In other words, each curve 100 represents the "locus of points" defining the set of threshold values for which - after the time corresponding to that particular curve has elapsed - the germination or growth of the mycelium begins to occur.

The curve indicated with reference number 101 indicates the fact that, by way of example, at a temperature of 20°C, with a relative humidity of about 92%, after 1 day the growth of the mycelium begins to occur, which happens in a multitude of conditions, for example even at a temperature of about 12.5°C, with a relative humidity of 95%.

Similarly, the curve indicated with reference number 102 indicates the fact that, by way of example, at a temperature of about 22.5°C, with a relative humidity of 95%, after 1 day germination of spores begins to occur, which happens in a multitude of conditions, for example even at a temperature of 15°C, with a relative humidity of about 97%.

The curve indicated by the expression LIM, indicates the limit curves, below which a region of the graphs is identified where a plurality of combinations of temperature and relative humidity fall, in correspondence with which there is no growth of the mycelium, nor germination of spores.

In other examples, it is possible to use more complex algorithms to assess the risk factor, which can take into consideration many other factors able to affect the thermal state of the room.

By way of a non-exhaustive example, among the different parameters that can be taken into account to calculate the risk factor the following can be provided:
- external climatic conditions (for example atmospheric pressure, external humidity),
- the degree of thermal insulation of the room to be conditioned 50,
- the energy efficiency index for the room to be conditioned 50,
- the volume of the room to be conditioned 50,
- the geographical exposure of the room to be conditioned 50 with respect to the cardinal points (north, south, east, west),
- the position of the conditioning apparatus 10 in the room to be conditioned 50 (near the walls, in the center of the room, ...),
- the intended use of the room to be conditioned 50 (kitchen, living room, bedroom, laundry room, ...),
- the type of building materials used for the construction of the walls of the room to be conditioned (biodegradable, non-biodegradable, etc.).

Although not presently claimed, the parameters listed above may be introduced into the conditioning apparatus 10 by the user, for example by means of the user interface 20.

One or more of the parameters listed above may be directly detected and/or estimated by means of some instruments and/or sensors.

As an example, the volume of the room to be conditioned 50 can be measured by infrared scanning technology. The position of the conditioning apparatus 10 can also be estimated on the basis of infrared sensors.

In some embodiments, some of the parameters listed above, such as for example the external climatic conditions (whether current or in the form of forecasts for the following days), can be communicated to the control and management unit 18 from the outside.

The method according to the invention therefore provides that the conditioning apparatus 10 is activated for a determinate interval of time when the comparison between the calculated risk factor and the threshold value reveals a high risk of mold formation, for example as explained with reference to the three examples described above.

In some embodiments, the method according to the invention provides to activate the conditioning apparatus 10 when the outcome of the step of comparing the risk factor with the respective threshold value has revealed a high risk of mold formation at least for a minimum period of time within a reference time frame.

For example, in some embodiments, the conditioning apparatus 10 is activated when the comparison between the risk factor and the threshold value has revealed a high risk of mold formation at least for one hour or for two hours within a reference time frame of twelve hours.

The activation of the conditioning apparatus 10 comprises the activation of the heating element of the conditioning device 12, and the fan 15.

According to some embodiments, the activation of the conditioning apparatus 10 can comprise the activation of the heating element of the conditioning device 12, and the activation of the fan 15, so as to emit hot air toward the room to be conditioned 50.

According to some embodiments, the speed of the fan 15 can be adjusted as a function of the difference between the calculated/measured risk factor and the threshold value.

As an example, if the difference between the risk factor and the threshold value is greater than a determinate value, that is an high risk of mold formation has been detected, the fan 15 can be activated at maximum speed, while if the difference between the risk factor and the threshold value is lower than that determinate value, the fan 15 can be activated at minimum speed.

In this way, on the one hand, it is possible to obtain quickly a reduction of the risk of mold formation when it is particularly high, and on the other it is possible to reduce the overall energy consumption.

As an example, in the case of the risk factor calculated as the ratio between the temperatures, if the value is between 0.60 and 0.65 it could be provided to activate the fan 15 at lower speed, for example, in low or medium mode, while if the value is lower than 0.6, or possibly lower than 0.55, the fan 15 can be activated at maximum speed.

In some embodiments, the determinate time interval as above for which the conditioning apparatus 10 remains active is a function of the characteristic conditions as above.

In one embodiment, the conditioning apparatus 10 remains active for the time necessary to ensure that the risk factor is lowered so that the outcome of the subsequent comparison with the threshold value no longer indicates a high risk of mold formation.

Although not presently claimed, the control and command unit 18 may modify the time interval during which the conditioning apparatus 10 remains active, for example extending it when particular conditions occur. In particular, this can happen on the basis of meteorological information received by the control and command unit 18, for example when several consecutive days of rain are forecast in which the humidity will certainly be very high. Again, this can happen if molds are detected in the room to be conditioned, for example by means of optical sensors or directly by a user, and this information is communicated to the control and command unit 18 which extends the time interval during which the apparatus remains active.

According to some embodiments, when the outcome of the comparison between the risk factor and the threshold value reveals a minimum, or null risk of mold formation, the method provides to deactivate and/or put in stand-by the conditioning apparatus 10.

Thanks to the control method and to the conditioning apparatus 10 which implements it, the present invention provides a solution that allows to automatically activate the apparatus in order to prevent or limit the formation and growth of molds. This is particularly useful when a user is absent for a prolonged period of time, even weeks or months, during which the conditioning apparatus 10 can still be activated for the time necessary, for example also daily, to keep the risk of mold formation low thanks to the control of the relative humidity inside the room to be conditioned 50, operating at the same time only for an optimal interval of time, without the need to be always active.

It is clear that modifications may be made to the method to control a conditioning apparatus, and to the conditioning apparatus 10 as described heretofore, without departing from the scope of the present invention.

It is also clear that, although the present invention has been described with reference to some specific examples, a person of skill in the art shall certainly be able to achieve many other equivalent forms of a method to control a conditioning apparatus and of a conditioning apparatus 10, having the characteristics as set forth in the claims.

## Claims

1. Method to control a conditioning apparatus (10) to prevent or reduce the risk or likelihood that molds will form, proliferate and grow, in particular in internal spaces conditioned by said conditioning apparatus (10), comprising the steps of:
- receiving information that is characteristic of a room to be conditioned (50) indicative of the thermal state of said room to be conditioned (50),
- calculating a risk factor indicative of the likelihood of mold formation in said room to be conditioned (50), in which said risk factor is a function of said characteristic information,
- comparing said risk factor with a respective threshold value,
- activating said conditioning apparatus (10) for a determinate interval of time when the outcome of the step of comparing said risk factor with said respective threshold value reveals a high risk of mold formation, **characterized in that** during said step of receiving the characteristic information of a room to be conditioned (50) said method provides to drive in an alternate movement deflector means (17) comprised in said conditioning apparatus (10) so as to mix the air in the room to be conditioned (50).

2. Method as in claim 1, **characterized in that** it provides to activate said conditioning apparatus (10) when the outcome of said step of comparing the risk factor with said respective threshold value has revealed a high risk of mold formation at least for a minimum period of time within a reference time frame.

3. Method as in claim 1 or 2, **characterized in that** said step of receiving the characteristic information of a room to be conditioned (50) provides to detect at least one temperature value and at least one relative humidity value by means of respective sensor means (21, 22, 23) comprised in said conditioning apparatus for a predefined monitoring period.

4. Method as in claim 3, **characterized in that** said predefined monitoring period is repeated cyclically at regular time intervals, for example every sixty minutes.

5. Method as in claims 3 or 4, **characterized in that** during said predefined monitoring period a plurality of successive measurements of temperature and relative humidity are made by said sensor means (21, 22), and **in that**, at the end of said monitoring period, it provides to average the detected values of temperature and relative humidity in order to obtain a respective average value of temperature and relative humidity.

6. Method as in any claim hereinbefore, **characterized in that** before said step of activating said conditioning apparatus (10), it provides a thermal scanning step of the room to be conditioned (50) by suitable sensor means comprised in said conditioning apparatus (10), and **in that** after said thermal scanning step of the room to be conditioned, it provides to drive said deflector means (17) comprised in said conditioning apparatus (10), to direct a flow of air arriving from said apparatus toward one or more zones with a reduced temperature that have been identified in said thermal scanning step.

7. Method as in any claim hereinbefore, **characterized in that** said step of activating said conditioning apparatus (10) comprises the activation of a heating element of the conditioning device (12), and the activation of a fan (15).

8. Method as in claim 7, **characterized in that** it provides to adjust the speed of said fan (15) as a function of the difference between said risk factor and said threshold limit.

9. Method as in any claim hereinbefore, **characterized in that** said characteristic information of a room to be conditioned (50) comprises one or more parameters selected from a group consisting of:
- temperature inside the room to be conditioned,
- external environmental temperature,
- relative humidity of the room to be conditioned (50),
- external humidity,
- atmospheric pressure,
- degree of thermal insulation of the room to be conditioned (50),
- energy efficiency index for the room to be conditioned (50),
- volume of the room to be conditioned (50),
- position of said conditioning apparatus in said room to be conditioned (50),
- geographical exposure of said room to be conditioned (50) with respect to the cardinal points,
- intended use of the room to be conditioned (50),
- building materials used for the construction of the walls of said room to be conditioned (50).

10. Method as in claim 9, **characterized in that** said external environmental temperature can be detected by temperature sensor means (23) located remote from the room to be conditioned (50) and operationally connected to said conditioning apparatus (10) and/or can be an external environmental temperature estimated or predicted by independent meteorological forecasting units, operationally connected to said conditional apparatus (10).

11. Method as in claim 9, **characterized in that** when the outcome of the comparison of the risk factor with the threshold value reveals a minimum, or null risk of mold formation, it provides to deactivate and/or put in stand-by the conditioning apparatus (10).

12. Apparatus to condition a room, **characterized in that** it comprises a control and command unit (18) which is configured to implement a control method as in any claim hereinbefore, and **in that** it also comprises:
- temperature and relative humidity sensor means (21, 22) operationally connected to the apparatus, which can be integrated directly into the apparatus or disposed on a separate device distant from the apparatus,
- conditioning device (12) able to heat or cool the air,
- ventilation device (14) configured to generate a flow of air directed toward said conditioning means (12) and the space to be conditioned,
- motor means (16) to drive said ventilation device (14),
- deflector means (17) configured to be driven in an alternate movement.

## Patentansprüche

1. Verfahren zur Steuerung einer Konditioniervorrichtung (10), um das Risiko oder die Wahrscheinlichkeit zu verhindern oder zu verringern, dass sich Schimmelpilze bilden, vermehren und wachsen, insbesondere in Innenräumen, die durch die Konditioniervorrichtung (10) klimatisiert werden, wobei das Verfahren die folgenden Schritte umfasst:
- Empfangen von Informationen, die für einen zu klimatisierenden Raum (50) charakteristisch sind und den thermischen Zustand des zu klimatisierenden Raums (50) anzeigen,
- Berechnen eines Risikofaktors, der die Wahrscheinlichkeit einer Schimmelbildung in dem zu klimatisierenden Raum (50) angibt, wobei der Risikofaktor eine Funktion der charakteristischen Information ist,
- Vergleichen des Risikofaktors mit einem jeweiligen Schwellenwert,
- Aktivieren der Konditioniervorrichtung (10) für eine bestimmte Zeitspanne, wenn das Ergebnis des Schrittes des Vergleichens des Risikofaktors mit dem jeweiligen Schwellenwert ein hohes Risiko der Schimmelbildung anzeigt, **dadurch gekennzeichnet, dass** während des Schrittes des Empfangens der charakteristischen Information eines zu klimatisierenden Raumes (50) das Verfahren vorsieht, Ablenkmittel (17), die in der Konditioniervorrichtung (10) enthalten sind, in eine Wechselbewegung zu versetzen, so dass die Luft in dem zu klimatisierenden Raum (50) vermischt wird.

2. Verfahren nach Anspruch 1, **dadurch gekennzeichnet, dass** es vorsieht, die Konditioniervorrichtung (10) zu aktivieren, wenn das Ergebnis des Schritts des Vergleichs des Risikofaktors mit dem jeweiligen Schwellenwert ein hohes Risiko der Schimmelbildung zumindest für eine minimale Zeitspanne innerhalb eines Referenzzeitrahmens ergeben hat.

3. Verfahren nach Anspruch 1 oder 2, **dadurch gekennzeichnet, dass** der Schritt des Empfangens der charakteristischen Informationen eines zu klimatisierenden Raums (50) vorsieht, mindestens einen Temperaturwert und mindestens einen relativen Feuchtigkeitswert mittels entsprechender Sensormittel (21, 22, 23), die in der Konditioniervorrichtung enthalten sind, für einen vordefinierten Überwachungszeitraum zu erfassen.

4. Verfahren nach Anspruch 3, **dadurch gekennzeichnet, dass** der vordefinierte Überwachungszeitraum zyklisch in regelmäßigen Zeitabständen, beispielsweise alle sechzig Minuten, wiederholt wird.

5. Verfahren nach Anspruch 3 oder 4, **dadurch gekennzeichnet, dass** während des vordefinierten Überwachungszeitraums mehrere aufeinanderfolgende Messungen der Temperatur und der relativen Luftfeuchtigkeit durch die Sensormittel (21, 22) vorgenommen werden, und dass am Ende des Überwachungszeitraums die erfassten Werte der Temperatur und der relativen Luftfeuchtigkeit gemittelt werden, um einen entsprechenden Mittelwert der Temperatur und der relativen Luftfeuchtigkeit zu erhalten.

6. Verfahren nach irgendeinem der vorhergehenden Ansprüche, **dadurch gekennzeichnet, dass** es vor dem Schritt des Aktivierens der Konditioniervorrichtung (10) einen Schritt des thermischen Abtastens des zu klimatisierenden Raums (50) durch geeignete, in der Konditioniervorrichtung (10) enthalte Sensormittel vorsieht, und dass es nach dem Schritt des thermischen Abtastens des zu klimatisierenden Raums vorsieht, die in der Konditioniervorrichtung (10) enthaltenen Ablenkmittel (17) anzutreiben, um einen Luftstrom, der von der Vorrichtung ankommt, zu einer oder mehreren Zonen mit einer reduzierten Temperatur zu leiten, die in dem Schritt des thermischen Abtastens identifiziert wurden.

7. Verfahren nach irgendeinem der vorhergehenden Ansprüche, **dadurch gekennzeichnet, dass** der Schritt des Aktivierens der Konditioniervorrichtung (10) die Aktivierung eines Heizelements der Konditioniervorrichtung (12) und die Aktivierung eines Gebläses (15) umfasst.

8. Verfahren nach Anspruch 7, **dadurch gekennzeichnet, dass** es vorsieht, die Geschwindigkeit des Gebläses (15) in Abhängigkeit von der Differenz zwischen dem Risikofaktor und dem Schwellenwert einzustellen.

9. Verfahren nach irgendeinem der vorhergehenden Ansprüche, **dadurch gekennzeichnet, dass** die charakteristische Information eines zu klimatisierenden Raums (50) einen oder mehrere Parameter umfasst, die ausgewählt sind aus einer Gruppe bestehend aus:
- Temperatur im Inneren des zu klimatisierenden Raums,
- Temperatur der äußeren Umgebung,
- relative Feuchtigkeit des zu klimatisierenden Raums (50),
- externe Luftfeuchtigkeit,
- atmosphärischer Druck,
- Grad der Wärmedämmung des zu klimatisierenden Raums (50),
- Energie-Effizienz-Index für den zu klimatisierenden Raum (50),
- Volumen des zu klimatisierenden Raums (50),
- Position der Konditioniervorrichtung in dem zu klimatisierenden Raum (50),
- geografische Lage des zu klimatisierenden Raums (50) in Bezug auf die Himmelsrichtungen,
- beabsichtigte Nutzung des zu klimatisierenden Raums (50),
- die für die Konstruktion der Wände des zu klimatisierenden Raums (50) verwendeten Baumaterialien.

10. Verfahren nach Anspruch 9, **dadurch gekennzeichnet, dass** die Temperatur der äußeren Umgebung durch Temperatursensormittel (23) erfasst werden kann, die sich entfernt von dem zu klimatisierenden Raum (50) befinden und operativ mit der Konditioniervorrichtung (10) verbunden sind, und/oder eine Temperatur der äußeren Umgebung sein kann, die durch unabhängige meteorologische Vorhersageeinheiten, die operativ mit der Konditioniervorrichtung (10) verbunden sind, geschätzt oder vorhergesagt wird.

11. Verfahren nach Anspruch 9, **dadurch gekennzeichnet, dass** es, wenn das Ergebnis des Vergleichs des Risikofaktors mit dem Schwellenwert ein minimales oder Null-Risiko der Schimmelbildung ergibt, vorsieht, die Konditioniervorrichtung (10) zu deaktivieren und/oder in den Stand-by-Modus zu versetzen.

12. Vorrichtung zur Klimatisierung eines Raums, **dadurch gekennzeichnet, dass** sie eine Steuer- und Befehlseinheit (18) umfasst, die so konfiguriert ist, dass sie ein Steuerungsverfahren gemäß irgendeinem der vorhergehenden Ansprüche implementiert, und dass sie außerdem umfasst:
- Sensormittel (21, 22) zur Erfassung der Temperatur und der relativen Luftfeuchtigkeit, die operativ mit der Vorrichtung verbunden sind und die direkt in die Vorrichtung integriert oder auf einer separaten, von der Vorrichtung entfernten Einrichtung angeordnet sein können,
- eine Konditioniervorrichtung (12), die in der Lage ist, die Luft zu erwärmen oder zu kühlen,
- eine Belüftungsvorrichtung (14), die so konfiguriert ist, dass sie einen Luftstrom erzeugt, der auf die Konditionierungsmittel (12) und den zu klimatisierenden Raum gerichtet ist,
- Motormittel (16) zum Antrieb der Belüftungsvorrichtung (14),
- Ablenkmittel (17), die so konfiguriert sind, dass sie in einer Wechselbewegung angetrieben werden können.

## Revendications

1. Procédé de contrôle d'un appareil de conditionnement (10) pour prévenir ou réduire le risque ou la probabilité de formation, de prolifération et de croissance de moisissures, en particulier dans des espaces internes conditionnés par ledit appareil de conditionnement (10), comprenant les étapes suivantes :
• recevoir des informations caractéristiques d'une pièce à conditionner (50) indiquant l'état thermique de ladite pièce à conditionner (50),
• calculer un facteur de risque indiquant la probabilité de formation de moisissures dans ladite pièce à conditionner (50), ledit facteur de risque étant fonction desdites informations caractéristiques,
• comparer ledit facteur de risque avec une valeur seuil respective,
• activer ledit appareil de conditionnement (10) pendant un intervalle de temps déterminé lorsque le résultat de l'étape de comparaison du facteur de risque avec ladite valeur seuil respective révèle un risque élevé de formation de moisissures, ***caractérisé* en ce que** pendant ladite étape de réception des informations caractéristiques d'une pièce à conditionner (50), ledit procédé consiste à entraîner en mouvement alternatif des moyens déflecteurs (17) compris dans ledit appareil de conditionnement (10) de manière à mélanger l'air dans la pièce à conditionner (50).

2. Procédé selon la revendication 1, ***caractérisé* en ce qu'**il consiste à activer ledit appareil de conditionnement (10) lorsque le résultat de ladite étape de comparaison du facteur de risque avec ladite valeur seuil respective a révélé un risque élevé de formation de moisissures pendant au moins une période minimale dans une période de référence.

3. Procédé selon la revendication 1 ou 2, ***caractérisé* en ce que** ladite étape de réception des informations caractéristiques d'une pièce à conditionner (50) consiste à détecter au moins une valeur de température et au moins une valeur d'humidité relative au moyen de moyens de capteur respectifs (21, 22, 23) compris dans ledit appareil de conditionnement pendant une période de surveillance prédéfinie.

4. Procédé selon la revendication 3, ***caractérisé* en ce que** ladite période de surveillance prédéfinie est répétée cycliquement à intervalles de temps réguliers, par exemple toutes les soixante minutes.

5. Procédé selon les revendications 3 ou 4, ***caractérisé* en ce que** pendant ladite période de surveillance prédéfinie, une pluralité de mesures successives de température et d'humidité relative sont effectuées par lesdits moyens de capteur (21, 22), et qu'à la fin de ladite période de surveillance, il est prévu de faire la moyenne des valeurs détectées de température et d'humidité relative afin d'obtenir une valeur moyenne respective de température et d'humidité relative.

6. Procédé selon l'une quelconque des revendications précédentes, ***caractérisé* en ce qu'**avant ladite étape d'activation dudit appareil de conditionnement (10), il comprend une étape de balayage thermique de la pièce à conditionner (50) au moyen de moyens de capteur appropriés compris dans ledit appareil de conditionnement (10), et **en ce qu'**après ladite étape de balayage thermique de la pièce à conditionner, il consiste à entraîner en mouvement lesdits moyens déflecteurs (17) compris dans ledit appareil de conditionnement (10), pour diriger un flux d'air arrivant depuis ledit appareil vers une ou plusieurs zones à température réduite qui ont été identifiées dans ladite étape de balayage thermique.

7. Procédé selon l'une quelconque des revendications précédentes, ***caractérisé* en ce que** ladite étape d'activation dudit appareil de conditionnement (10) comprend l'activation d'un élément chauffant de l'appareil de conditionnement (12), et l'activation d'un ventilateur (15).

8. Procédé selon la revendication 7, ***caractérisé* en ce qu'**il consiste à régler la vitesse dudit ventilateur (15) en fonction de la différence entre ledit facteur de risque et ladite limite seuil.

9. Procédé selon l'une quelconque des revendications précédentes, ***caractérisé* en ce que** lesdites informations caractéristiques d'une pièce à conditionner (50) comprennent un ou plusieurs paramètres choisis parmi un groupe comprenant :
• la température à l'intérieur de la pièce à conditionner,
• la température extérieure,
• l'humidité relative de la pièce à conditionner (50),
• l'humidité extérieure,
• la pression atmosphérique,
• le degré d'isolation thermique de la pièce à conditionner (50),
• l'indice d'efficacité énergétique de la pièce à conditionner (50),
• le volume de la pièce à conditionner (50),
• la position dudit appareil de conditionnement dans ladite pièce à conditionner (50),
• l'exposition géographique de ladite pièce à conditionner (50) par rapport aux points cardinaux,
• l'utilisation prévue de la pièce à conditionner (50),
• les matériaux de construction utilisés pour les parois de ladite pièce à conditionner (50).

10. Procédé selon la revendication 9, ***caractérisé* en ce que** ladite température extérieure peut être détectée par des moyens de capteur de température (23) situés à distance de la pièce à conditionner (50) et connectés opérationnellement audit appareil de conditionnement (10) et/ou peut être une température extérieure estimée ou prédite par des unités de prévision météorologique indépendantes, connectées opérationnellement audit appareil de conditionnement (10).

11. Procédé selon la revendication 9, ***caractérisé* en ce que** lorsque le résultat de la comparaison du facteur de risque avec la valeur seuil révèle un risque minimal ou nul de formation de moisissures, il consiste à désactiver et/ou à mettre en veille l'appareil de conditionnement (10).

12. Appareil de conditionnement d'une pièce, ***caractérisé* en ce qu'**il comprend une unité de contrôle et de commande (18) configurée pour mettre en oeuvre un procédé de contrôle selon l'une quelconque des revendications précédentes, et **en ce qu'**il comprend également :
• des moyens de capteur de température et d'humidité relative (21, 22) connectés opérationnellement à l'appareil, qui peuvent être intégrés directement à l'appareil ou disposés sur un dispositif séparé distant de l'appareil,
• un dispositif de conditionnement (12) capable de chauffer ou refroidir l'air,
• un dispositif de ventilation (14) configuré pour générer un flux d'air dirigé vers ledit dispositif de conditionnement (12) et l'espace à conditionner,
• des moyens moteurs (16) pour entraîner ledit dispositif de ventilation (14) ;
• des moyens déflecteurs (17) configurés pour être entraînés en mouvement alternatif.
